# EUROPEAN PATENT APPLICATION

(11) **EP 4 625 377 A1**
(43) Date of publication of application: **01.10.2025**
(21) Application number: 25165895.1
(22) Date of filing: 25.03.2025
(51) Int. Cl.: G07G 1/00

(54) **ERRONEOUS OPERATION PREVENTION SYSTEM, ERRONEOUS OPERATION PREVENTION METHOD, AND COMPUTER PROGRAM PRODUCT FOR ERRONEOUS OPERATION PREVENTION**

(30) Priority: 26.03.2024 JP 2024049747
(71) Applicant: GLORY LTD., Himeji-shi Hyogo 670-8567 (JP)
(72) Inventor: TSUJI, Hiro, Hyogo, 670-8567 (JP); NAKAMURA, Toshiki, Hyogo, 670-8567 (JP); NAKAJIMA, Yoshihiro, Hyogo, 670-8567 (JP)
(74) Representative: SSM Sandmair

(57) **Abstract**

A camera 10 captures an image of a checkout state of a customer at a self-checkout machine 20, and transmits the captured image to a management device 40 (S1). The management device 40 extracts a commodity image from the received image (S2). When commodities have been registered by the customer scanning the commodities, the self-checkout machine 20 transmits data of checkout commodities having been registered, to the management device 40 (S3). Using the extracted commodity image and commodity names in the checkout commodity data, the management device 40 calculates a similarity therebetween by using a learned multimodal foundation model (S4). If the calculated similarity is less than a threshold value, a clerk is notified of an erroneous operation warning through a clerk terminal 50 (S5).

## Description

### TECHNICAL FIELD

The present disclosure relates to an erroneous operation prevention system, an erroneous operation prevention method, and a computer program product for erroneous operation prevention for detecting an erroneous operation during checkout for commodities with a self-checkout machine.

### BACKGROUND ART

In recent years, there has been an increase in the number of stores introducing a self-checkout machine that allows a customer to perform checkout for commodities that the customer purchases. In the checkout, the customer uses the self-checkout machines to scan labels attached to the commodities. This allows prices of the commodities to be identified based on the labels and information such as names and prices is registered for settlement of the transaction amount. Such a self-checkout machine may be called a self-checkout device, a self-checkout register, or a self-checkout terminal.

With such a self-checkout machine, there is a possibility that a customer performs a fraudulent act which may be called "shoplifting", or an erroneous operation due to inaccurate scanning. Specifically, a customer may intentionally or inadvertently perform inaccurate scanning of a commodity to purchase, or a customer may register a commodity, which is cheaper than a commodity that the customer is actually going to purchase, by replacing a barcode seal, for example.

In order to prevent such fraudulent acts and erroneous operations, a conventional technique of automatically registering commodities by using an image recognition technique has been known. For example, Japanese Patent No. 6172380 discloses a technique for specifying and registering commodities by performing image matching in which each commodity is identified by comparing an image of the commodity with reference images prepared for all commodities. In this technique, the image matching is performed with probable commodities being selected according to the movement-trajectory of the customer because matching with all reference images will take a long time.

Japanese Laid-Open Patent Publication No. 2020-077275 discloses a technique in which a motion of a customer putting a commodity in a cart and a change in the number of commodities on a display shelf due to the motion are recognized through image processing to specify a commodity to be purchased, followed by a checkout process. Japanese Laid-Open Patent Publication No. 2021-135620 discloses a technique in which an image of a commodity to be put in a basket is captured with a camera, the commodity is identified and registered based on the image by using a machine learning model. In this technique, the customer is urged to perform barcode scanning when commodity identification accuracy is poor.

### SUMMARY

However, in the technique of Japanese Patent No. 6172380, it is necessary to register the reference images of commodities in advance. A huge amount of time and man-hours are required for registering the images of all the commodities to be sold in the store. Even after the images of all the commodities have been registered, each commodity needs to be re-registered if the package thereof is changed. The registration operation for commodity reference images may constantly occur, which is not practical.

In the techniques of Japanese Laid-Open Patent Publications Nos. 2020-077275 and 2021-135620, it is necessary to capture behavior of each customer visiting the store with an in-store camera, and manage information on commodities that the customer is going to put in a basket, which requires complicated management and handling of data of the customers and the commodities. If the fact that commodities are registered by the image recognition technique is known to customers, there is a possibility that a malicious customer may hide a commodity from an image capturing means to prevent the commodity from being registered.

The present disclosure has been made in view of the problem, as well as other problems, of the conventional art, and the present disclosure addresses these issues, as discussed herein, with an erroneous operation prevention system, an erroneous operation prevention method, and a computer program product for erroneous operation prevention for detecting an erroneous operation during checkout for commodities with a self-checkout machine.

An erroneous operation prevention system according to one aspect of the present disclosure is used in a self-checkout system in which a customer registers a commodity to be purchased by his/her own operation, and performs checkout for the registered commodity. The erroneous operation prevention system includes: an image acquisition unit configured to acquire an image in which the customer is registering a commodity to be purchased; a commodity image extraction unit configured to extract a commodity image from the image acquired by the image acquisition unit; a registered commodity specification unit configured to specify commodity information registered in the self-checkout system; a matching judgement unit configured to input the commodity image and the commodity information into a large language model, and judge matching between the commodity image and the commodity information, based on a result outputted from the large language model; and a notification unit configured to, when the matching judgement unit has judged that a degree of matching is low, notify that the degree of matching is low.

The objects, features, advantages, and technical and industrial significance of this disclosure will be better understood by the following description and the accompanying drawings of the disclosure.

### BRIEF DESCRIPTION OF THE DRAWINGS

FIG. 1 illustrates an outline of an erroneous operation prevention system according to Embodiment 1;
FIG. 2 shows a system configuration of the erroneous operation prevention system according to Embodiment 1;
FIG. 3 shows an external configuration of a self-checkout machine and a camera shown in FIG. 2;
FIG. 4 is a functional block diagram showing a configuration of a management device shown in FIG. 2;
FIGS. 5A and 5B show examples of commodity image data and checkout commodity data shown in FIG. 4;
FIG. 6 shows an outline (part 1) of CLIP;
FIG. 7 shows an outline (part 2) of CLIP;
FIG. 8 is a flowchart showing a procedure related to an erroneous operation detection process according to Embodiment 1;
FIG. 9 shows an example of a hardware configuration according to Embodiment 1.
FIGS. 10A and 10B illustrate an outline of an erroneous operation prevention system according to a modification;
FIGS. 11A and 11B illustrate an outline of an erroneous operation prevention system according to Embodiment 2;
FIG. 12 is a functional block diagram showing a configuration of a management device according to Embodiment 2;
FIG. 13 shows an example of question data shown in FIG. 12; and
FIG. 14 is a flowchart showing a procedure related to an erroneous operation detection process according to Embodiment 2.

### DESCRIPTION OF EMBODIMENTS

### [Embodiment 1]

Hereinafter, an embodiment of an erroneous operation prevention system, an erroneous operation prevention method, and a computer program product for erroneous operation prevention will be described in detail with reference to the drawings.

### <Outline of erroneous operation prevention system according to Embodiment 1>

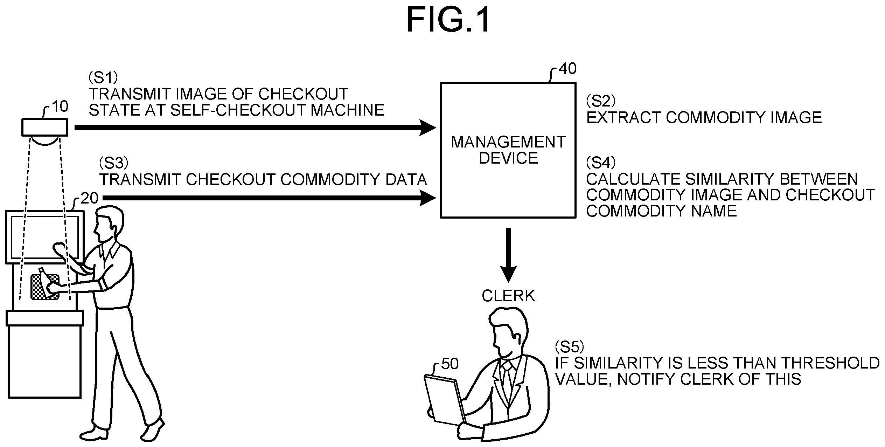

An outline of an erroneous operation prevention system according to Embodiment 1 will be described with reference to FIG. 1.

As shown in FIG. 1, in the erroneous operation prevention system, a camera 10 captures an image of a checkout state of a customer at a self-checkout machine 20, and transmits the captured image to a management device 40 (S1). The management device 40 extracts a commodity image from the received image (S2). The image of the checkout state includes images of commodities that the customer processes with the self-checkout machine 20.

When commodities have been registered by the customer scanning the commodities, the self-checkout machine 20 transmits data of checkout commodities having been registered, to the management device 40 (S3). Using the extracted commodity image and commodity names in the checkout commodity data, the management device 40 calculates a similarity therebetween by using a learned multimodal foundation model (S4).

If the calculated similarity is less than a threshold value, a clerk is notified of an erroneous operation warning through a clerk terminal 50 (S5).

As described above, in the erroneous operation prevention system according to Embodiment 1, the commodity image is extracted from the image obtained by capturing the checkout state of the customer at the self-checkout machine, a similarity between the commodity image and the checkout commodities settled with the self-checkout machine is calculated with the learned multimodal foundation model, and if this similarity is less than the threshold value, the clerk is notified of the same. Therefore, an erroneous operation during checkout for commodities with the self-checkout machine can be efficiently detected.

### <System configuration of erroneous operation prevention system according to Embodiment 1>

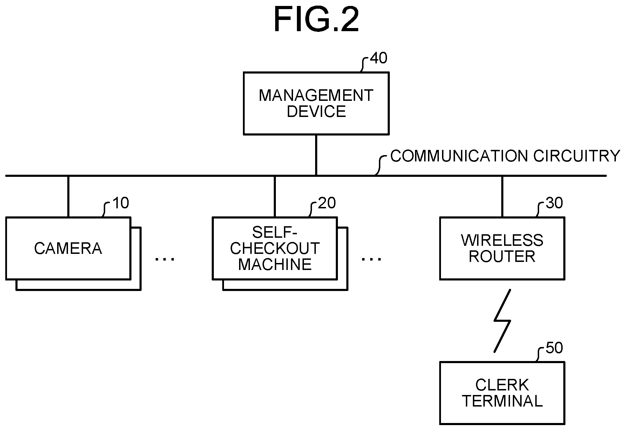

Next, the system configuration of the erroneous operation prevention system according to Embodiment 1 will be described with reference to FIG. 2.

As shown in FIG. 2, the management device 40 installed in an office or the like of the store is communicably connected to cameras 10, self-checkout machines 20, and a wireless router 30 via communication circuitry. The wireless router 30 is connected to the clerk terminal 50 by short-range wireless communication such as Wi-Fi (registered trademark).

Each camera 10 is an imaging device installed above the corresponding self-checkout machine 20 so as to capture an image of the checkout state at the self-checkout machine 20. The camera 10 transmits the captured image to the management device 40.

The self-checkout machine 20 is a device with which the customer performs checkout for commodities by himself/herself. When a commodity has been scanned, the self-checkout machine 20 specifies commodity information and the monetary amount from data acquired through the scanning, and transmits, to the management device 40, checkout commodity data including the commodity information, the monetary amount, and the checkout machine ID.

The management device 40 is a device for detecting an erroneous operation during checkout for commodities. The management device 40 acquires image data transmitted from the camera 10 installed above the self-checkout machine 20 via the communication circuitry, acquires images of commodities shown in the image data, and stores the images of commodities into commodity image data.

Upon receiving the checkout commodity data from the self-checkout machine 20, the management device 40 associates the checkout machine ID, the monetary amount, and the commodity information, included in the checkout commodity data, with each other, and stores them as checkout commodity data.

When the checkout commodity data has been updated, the management device 40 specifies the checkout machine ID corresponding to the updated data, and extracts, from the commodity image data, the most recent commodity image data corresponding to the checkout machine ID. Then, using the extracted commodity image data and the commodity names corresponding to the updated data in the checkout commodity data, a similarity therebetween is calculated with a learned multimodal foundation model. If the calculated similarity is less than the threshold value, the clerk terminal 50 is notified of an erroneous operation warning including the checkout machine ID and the commodity names.

The clerk terminal 50 is a terminal device, such as a tablet, possessed by the clerk. Upon receiving the erroneous operation warning from the management device 40, the clerk terminal 50 displays the checkout machine ID and the commodity names included in the erroneous operation warning.

### <External configuration of self-checkout machine 20 and camera 10>

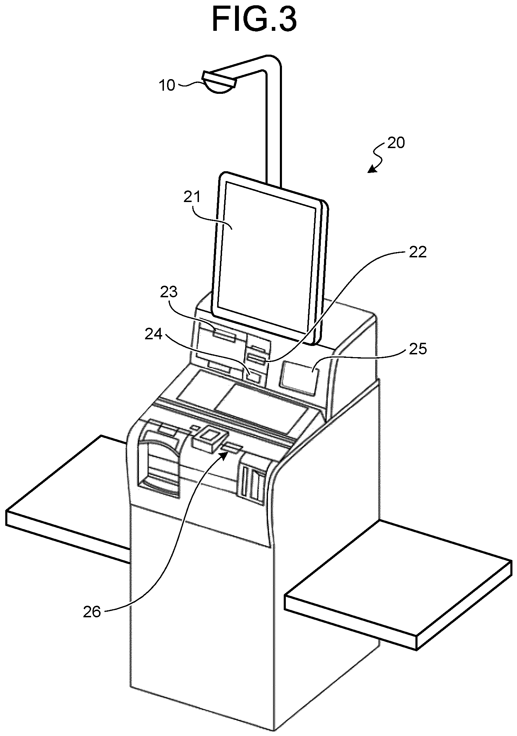

The external configuration of the self-checkout machine 20 and the camera 10 shown in FIG. 2 will be described with reference to FIG. 3.

As shown in FIG. 3, the self-checkout machine 20 includes a display/operation unit 21, a card reader/writer 22, a printer 23, a speaker 24, a scanner 25, and a cash handling machine 26. Furthermore, the camera 10 is installed above the self-checkout machine 20 via a pole.

The display/operation unit 21 is an input/output device, such as a touch panel display, which displays the name, the price, etc., of a commodity read by the scanner 25, and receives information on a checkout process, etc. The card reader/writer 22 is an input/output device which performs read and write operations on a card such as a credit card.

The printer 23 is an output device for printing a checkout receipt, etc. The speaker 24 is a voice output device for outputting, by a voice, a checkout procedure, etc. The scanner 25 is an input device for reading a barcode of the commodity. The cash handling machine 26 includes a banknote inlet, a banknote outlet, a coin inlet, and a coin outlet, and performs reception and return of money related to checkout.

### <Configuration of management device 40>

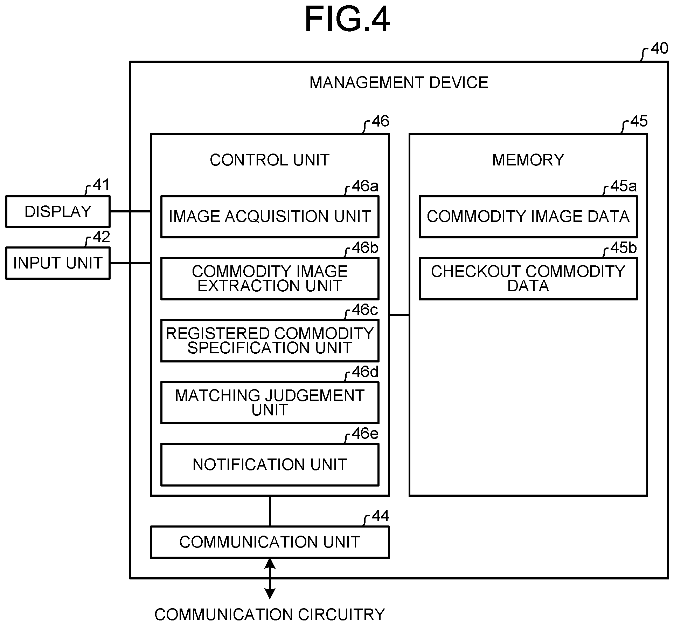

The configuration of the management device 40 shown in FIG. 2 will be described with reference to a functional block diagram shown in FIG. 4. As shown in FIG. 4, the management device 40 is connected to a display 41 and an input unit 42. The management device 40 includes a communication unit 44, a memory 45, and a control unit 46.

The display 41 is a display device such as a liquid crystal panel display. The input unit 42 is an input device such as a keyboard and a mouse. The communication unit 44 is an interface for performing data communication with the camera 10, the self-checkout machine 20, and the clerk terminal 50 via the communication circuitry.

The memory 45 is a storage device such as a hard disk drive or a non-volatile memory. The memory 45 stores therein commodity image data 45a and checkout commodity data 45b.

The commodity image data 45a is data indicating a commodity image extracted from the image showing the checkout state at the self-checkout machine 20. The checkout commodity data 45b is data indicating commodity information of commodities settled with the self-checkout machine 20.

The control unit 46 is a controller for controlling the entirety of the management device 40. The control unit 46 includes an image acquisition unit 46a, a commodity image extraction unit 46b, a registered commodity specification unit 46c, a matching judgement unit 46d, and a notification unit 46e. In actuality, processes corresponding to the image acquisition unit 46a, the commodity image extraction unit 46b, the registered commodity specification unit 46c, the matching judgement unit 46d, and the notification unit 46e are performed by loading programs for these units into a CPU (Central Processing Unit) and causing the CPU to execute the programs.

The image acquisition unit 46a is a processing unit for acquiring an image captured by the camera 10. The image acquisition unit 46a acquires, via the communication circuitry, image data transmitted from the camera 10 installed above the self-checkout machine 20.

The commodity image extraction unit 46b is a processing unit for extracting a commodity image from the image data acquired by the image acquisition unit 46a. The commodity image extraction unit 46b detects commodities shown in the image data acquired by the image acquisition unit 46a, acquires the commodity image, and stores the commodity image into the commodity image data 45a.

The registered commodity specification unit 46c is a processing unit for acquiring checkout commodity data. Upon receiving the checkout commodity data from the self-checkout machine 20, the registered commodity specification unit 46c associates the checkout machine ID, the monetary amount, and the commodity information, included in the checkout commodity data, with each other, and stores them in the checkout commodity data 45b.

The matching judgement unit 46d is a processing unit for judging presence/absence of an erroneous operation during checkout for commodities. When the checkout commodity data 45b has been updated by the registered commodity specification unit 46c, the matching judgement unit 46d specifies the checkout machine ID corresponding to the updated data, and extracts, from the commodity image data 45a, the most recent commodity image data corresponding to the checkout machine ID. Then, using the extracted commodity image data and the commodity names corresponding to the updated data in the checkout commodity data 45b, a similarity therebetween is calculated with a learned multimodal foundation model. In Embodiment 1, CLIP (Contrastive Language-Image Pre-Training) is used as the multimodal foundation model. CLIP will be described in detail later.

If the similarity calculated by CLIP is less than the threshold value, the matching judgement unit 46d transmits, to the notification unit 46e, an erroneous operation notification including the checkout machine ID and the commodity names in the checkout commodity data 45b used for calculating the similarity.

The notification unit 46e is a processing unit for notifying the clerk terminal 50 of the erroneous operation warning. Upon receiving the erroneous operation notification from the matching judgement unit 46d, the notification unit 46e notifies the clerk terminal 50 of this erroneous operation notification as an erroneous operation warning.

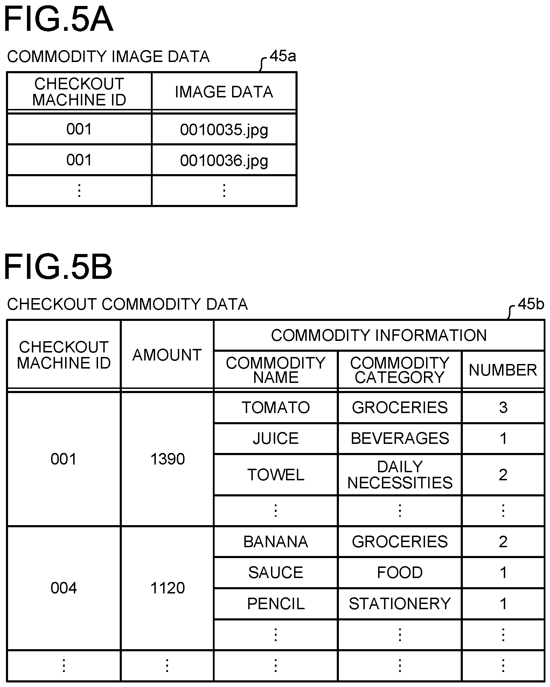

Next, an example of data stored in the memory 45 in the management device 40 shown in FIG. 4 will be described. FIGS. 5A and 5B show examples of the commodity image data 45a and the checkout commodity data 45b shown in FIG. 4.

In the commodity image data 45a shown in FIG. 5A, checkout machine ID "001" is associated with image data "0010035.jpg", and the checkout machine ID "001" is associated with image data "0010036.jpg".

In the checkout commodity data 45b shown in FIG. 5B, the checkout machine ID "001" is associated with monetary amount "1,390" JPY. Furthermore, the checkout machine ID "001" is associated with, as commodity information, a state where the commodity name is "tomato", the commodity category is "groceries", and the number is "3", a state where the commodity name is "juice", the commodity category is "beverages", and the number is "1", and a state where the commodity name is "towel", the commodity category is "daily necessities", and the number is "2".

Furthermore, in the checkout commodity data 45b, checkout machine ID "004" is associated with monetary amount "1,120" JPY. Moreover, the checkout machine ID "004" is associated with, as commodity information, a state where the commodity name is "banana", the commodity category is "groceries", and the number is "2", a state where the commodity name is "sauce", the commodity category is "food", and the number is "1", and a state where the commodity name is "pencil", the commodity category is "stationery", and the number is "1".

### <Outline of CLIP>

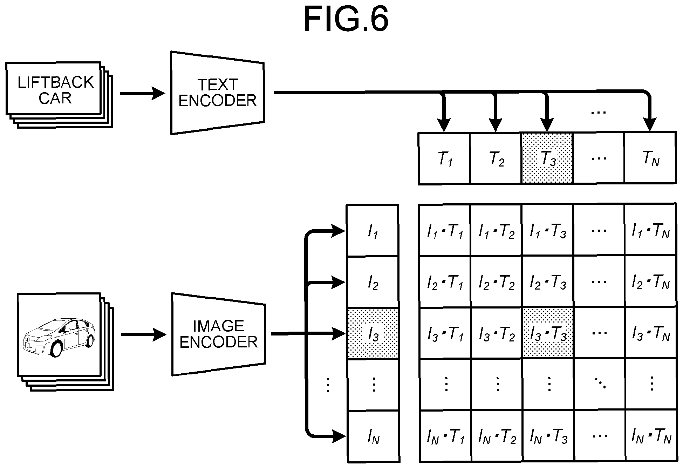

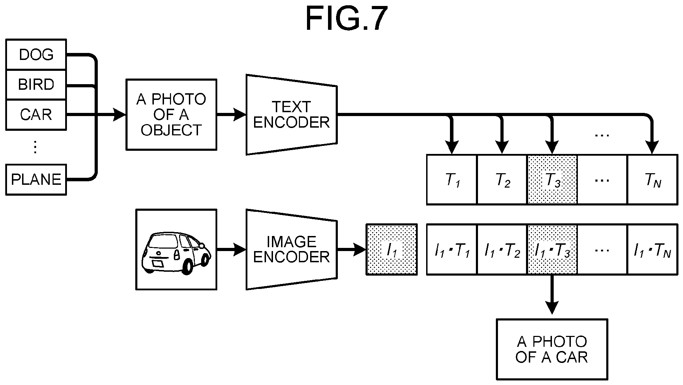

An outline of CLIP used as a multimodal foundation model in Embodiment 1 will be described with reference to FIG. 6 and FIG. 7.

CLIP is a machine learning model having an ability of comprehending text-image pairs, and associating them. CLIP is trained through a technique called contrastive learning by using a large-scale data set consisting of text-image pairs. The contrastive learning is a technique in which positive pairs (texts and images related to the texts) are made close to each other and negative pairs (texts and images unrelated to the texts) are made away from each other, whereby the model learns representation of data. In contrastive learning, a similarity between a text and an image is calculated by using cosine similarity.

In the training process of CLIP, a text encoder and an image encoder are used. The text encoder extracts a feature from a text, and the image encoder extracts a feature from an image. These features are mapped in the same space so that the model can comprehend a semantic similarity of modalities of the text and the image. This process allows CLIP to attain an ability of effectively associating an image with a related text.

For example, as shown in FIG. 6, a text "Liftback car" and an image to be paired with this text are inputted to the text encoder and the image encoder, respectively. The text encoder extracts a feature "car" from the inputted text, as "T3". The image encoder extracts a feature of a car from the inputted image, as "13". Both of them are mapped on the same space, and the inputted pair is placed at "I3•T3".

Unlike the conventional supervised learning model and a model specialized for a specific task, CLIP, having a zero-shot learning ability, can effectively perform inference even for a task and a category that are not directly seen during training.

For example, as shown in FIG. 7, if an image that is not directly seen during training is inputted from the image encoder, an optimum text "a photo of a car" is outputted from among text candidates of the text encoder of the trained CLIP.

### <Procedure regarding erroneous operation detection process according to Embodiment 1>

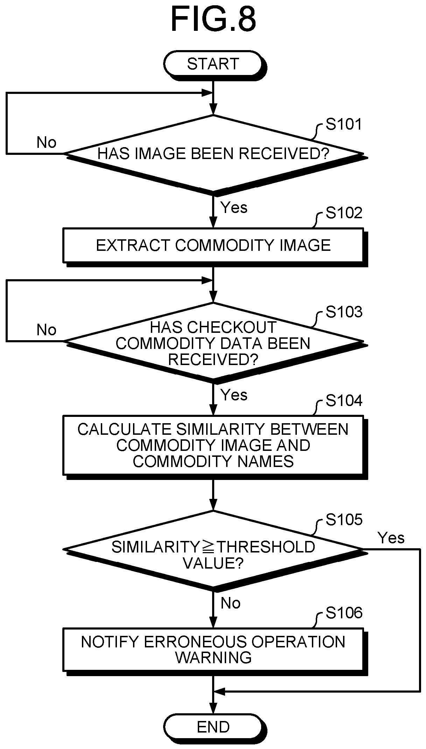

The procedure regarding an erroneous operation detection process according to Embodiment 1 will be described with reference to a flowchart shown in FIG. 8.

The camera 10 captures an image of a checkout state at the self-checkout machine 20, and transmits the captured image to the management device 40. As shown in FIG. 8, upon receiving the image from the camera 10 (step S101: Yes), the management device 40 extracts a commodity image from the received image (step S102), and stores the same into the commodity image data 45a. If an image is not received from the camera 10 (step S101: No), the process returns to step S101.

Upon receiving checkout commodity data from the self-checkout machine 20 (step S103: Yes), a checkout machine ID and commodity names are specified from the checkout commodity data. Then, the most recent commodity image data corresponding to the checkout machine ID is extracted from the commodity image data 45a. Using the extracted commodity image data and the commodity names specified from the checkout commodity data, a similarity therebetween is calculated with a learned multimodal foundation model (step S104). If checkout commodity data is not received from the self-checkout machine 20 (step S103: No), the process returns to step S103.

If the calculated similarity is equal to or higher than a threshold value (step S105: Yes), it is judged that the extracted commodity image data indicates the same commodities as the commodity names specified from the checkout commodity data and there is no erroneous operation, and the process is ended. If the calculated similarity is less than the threshold value (step S105: No), the clerk terminal 50 is notified of an erroneous operation warning, and the clerk terminal 50 announces the erroneous operation warning (step S106) to end the process.

### <Example of hardware configuration according to Embodiment 1>

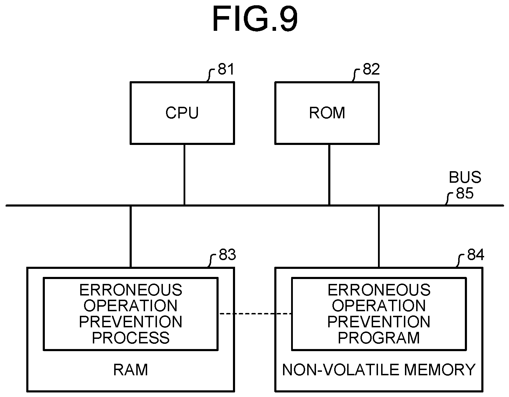

Correspondence between the management device 40 of the erroneous operation prevention system according to Embodiment 1 and a major hardware configuration of a computer will be described with reference to FIG. 9.

Generally, a computer has a configuration in which a CPU 81, a ROM 82, a R_AM 83, a non-volatile memory 84, etc., are connected by a bus 85. A hard disk drive may be adopted instead of the non-volatile memory 84. For convenience of description, only the basic hardware configuration is shown.

Here, the ROM 82 or the non-volatile memory 84 stores therein a program necessary for activating an operating system (hereinafter, simply referred to as "OS"), and the CPU 81 reads and executes the program for the OS from the ROM 82 or the non-volatile memory 84 when it is powered on.

Meanwhile, various kinds of application programs to be executed on the OS are stored in the non-volatile memory 84, and the CPU 81 executes an application program while using the RAM 83 as a main memory, thereby executing a process corresponding to the application.

Also, the erroneous operation prevention program of the management device 40 in the erroneous operation prevention system according to Embodiment 1 is stored in the non-volatile memory 84 or the like similarly to the other application programs, and the CPU 81 loads and executes the program. In the case of the management device 40 in the erroneous operation prevention system according to Embodiment 1, an erroneous operation prevention program including routines corresponding to the image acquisition unit 46a, the commodity image extraction unit 46b, the registered commodity specification unit 46c, the matching judgement unit 46d, and the notification unit 46e shown in FIG. 4 is stored in the non-volatile memory 84 or the like. The CPU 81 loads and executes the erroneous operation prevention program, whereby an erroneous operation prevention process corresponding to the image acquisition unit 46a, the commodity image extraction unit 46b, the registered commodity specification unit 46c, the matching judgement unit 46d, and the notification unit 46e is generated.

As described above, in the erroneous operation prevention system according to Embodiment 1, the commodity image is extracted from the image obtained by capturing the checkout state of the customer at the self-checkout machine. Then, using the commodity image and the checkout commodity settled with the self-checkout machine, a similarity therebetween is calculated with the learned multimodal foundation model. If the similarity is less than the threshold value, the clerk is notified of the same. Therefore, an erroneous operation during checkout for commodities with the self-checkout machine can be efficiently detected.

In the above Embodiment 1, the commodity image is extracted from the image obtained by capturing the checkout state of the customer at the self-checkout machine, a similarity between the commodity image and the checkout commodities settled with the self-checkout machine is calculated, and if the similarity is less than the threshold value, the clerk is notified of the same. However, the present disclosure is not limited thereto. If a commodity regarding the extracted image is not included in the checkout commodities settled with the self-checkout machine, the clerk may be notified that there is an omission of registration of the commodity.

In the above Embodiment 1, the commodity image is extracted from the image obtained by capturing the checkout state of the customer at the self-checkout machine, a similarity between the commodity image and the checkout commodities settled with the self-checkout machine is calculated, and if the similarity is less than the threshold value, the clerk is notified of the same. However, the present disclosure is not limited thereto. If the number of commodities regarding the extracted image is less than the number of checkout commodities settled with the self-checkout machine, the clerk may be notified that there is a duplicated registration of a commodity.

In the above Embodiment 1, the commodity image is extracted from the image obtained by capturing the checkout state of the customer at the self-checkout machine, a similarity between the commodity image and the checkout commodities settled with the self-checkout machine is calculated, and if the similarity is less than the threshold value, the clerk is notified of the same. However, the present disclosure is not limited thereto. If the commodity name or the commodity category regarding the extracted image is different from that of the checkout commodity settled with the self-checkout machine, the clerk may be notified that a commodity different from the actual commodity has been registered. For example, if the barcode label attached to the commodity is replaced, there is a difference in commodity name or commodity category between the extracted commodity image and the checkout commodity, so that the clerk is notified that a commodity different from the actual commodity has been registered.

In the above Embodiment 1, using the commodity image and the text data regarding the checkout commodities, a similarity therebetween is calculated with the learned multimodal foundation model. However, the present disclosure is not limited thereto. It is also possible to judge a specific object or state by subjecting a multimodal foundation model or the like to fine-tuning by using various combinations of texts, images, and videos.

In the above Embodiment 1, the commodity image is extracted from the image obtained by capturing the checkout state of the customer at the self-checkout machine, a similarity between the commodity image and the checkout commodities settled with the self-checkout machine is calculated, and if the similarity is less than the threshold value, the clerk is notified of the same. However, the present disclosure is not limited thereto. When the customer has failed to correctly scan a purchase-planned commodity by mistake (e.g., duplicated registration or the like) or when it is unknown whether such incorrect scanning is intentional, directly notifying the customer of the incorrect scanning does not leave a bad impression on the customer, and is not a burden on the clerk. Therefore, when the calculated similarity is less than the threshold value, the customer may be notified of the same. For example, a message "There is an unregistered commodity. Please check the registered content." may be displayed as a pop-up on the display/operation unit of the self-checkout machine. Alternatively, a display for arousing attention may be installed and such a message may be displayed on this display.

### [Modifications]

In the above Embodiment 1, the commodity image is extracted from the image obtained by capturing the checkout state of the customer at the self-checkout machine, a similarity between the commodity image and the checkout commodities settled with the self-checkout machine is calculated with the learned multimodal foundation model, and if this similarity is less than the threshold value, the clerk is notified of the same. In this case, in order to acquire the data regarding the checkout commodities settled with the self-checkout machine, a method of acquiring the checkout commodity data directly from the self-checkout machine is adopted. However, the present disclosure is not limited thereto.

The state in which the self-checkout machine displays the data regarding the checkout commodities on the display/operation unit may be captured with a camera, and text data may be extracted from the captured image to acquire the checkout commodity data.

In this modification, a description will be given of an erroneous operation prevention system that captures, with a camera, a state in which a self-checkout machine displays data regarding checkout commodities on a display/operation unit, and extracts text data from the captured image to acquire checkout commodity data.

### <Outline of erroneous operation prevention system according to modification>

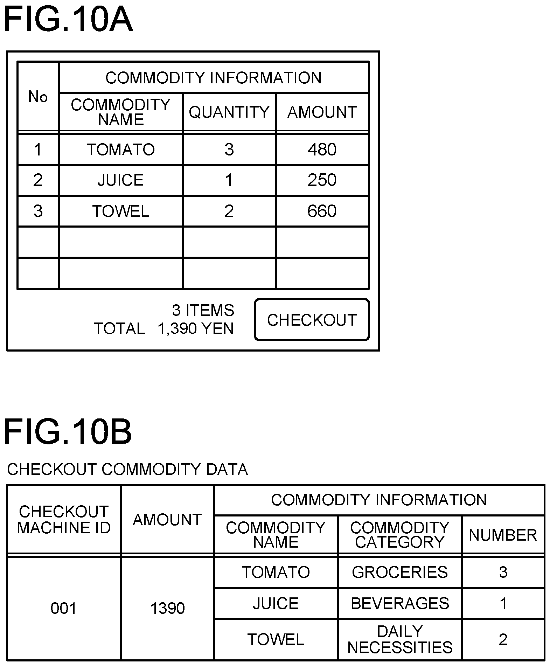

An outline of an erroneous operation prevention system according to the modification will be described with reference to FIGS. 10A and 10B.

In the self-checkout machine 20 according to the modification, data regarding checkout commodities are displayed on the display/operation unit 21. The camera 10 transmits an image obtained by capturing the display state to a management device (not shown). The management device extracts text data from the received image, and stores the text data as checkout commodity data.

For example, as shown in FIG. 10A, the self-checkout machine 20 displays, as checkout commodity data, a state where the commodity name is "tomato", the quantity is "3", and the monetary amount is "480" JPY, a state where the commodity name is "juice" , the quantity is "1", and the monetary amount is "250" JPY, a state where the commodity name is "towel", the quantity is "2", and the monetary amount is "660" JPY, and a state where the total amount of "3" items is "1,390" JPY, on the display/operation unit 21. The camera 10 captures this state, and transmits the captured image to the management device.

The management device extracts text data from the received image. As shown in FIG. 10B, the management device associates the checkout machine ID "001" with the monetary amount "1,390" JPY, and with, as commodity information, a state where the commodity name is "tomato", the commodity category is "groceries", and the number is "3", a state where the commodity name is "juice", the commodity category is "beverages", and the number is "1", and a state where the commodity name is "towel", the commodity category is "daily necessities", and the number is "2", and stores these pieces of information as checkout commodity data.

As described above, in the erroneous operation prevention system according to the modification, the state in which the self-checkout machine displays the data regarding the checkout commodities on the display/operation unit is captured by the camera, and the text data are extracted from the captured image to acquire the checkout commodity data. Furthermore, in the erroneous operation prevention system according to the modification, since the data regarding the checkout commodities are extracted from the image captured by the camera, communication with the self-checkout machine is not necessary. Therefore, it is not necessary to develop a new interface, and the system can be additionally installed on the existing self-checkout machine.

### [Embodiment 2]

In the above Embodiment 1, the commodity image is extracted from the image obtained by capturing the state in which the customer performs checkout at the self-checkout machine, a similarity between the commodity image and the checkout commodities settled with the self-checkout machine is calculated with the learned multimodal foundation model, and if the similarity is less than the threshold value, the clerk is notified of the same. However, the present disclosure is not limited thereto.

When performing checkout with the self-checkout machine, the customer holds a commodity in his/her hand, scans the commodity, and puts the commodity into a shopping basket. At each of the operations in this procedure, if which commodity is being handled can be detected, an erroneous operation of the customer at the self-checkout machine can be more accurately detected.

In order to realize this configuration, a technique, in which a commodity image according to a question content such as "what commodity a person holds in his/her hand" is extracted using a vision-language fusion model from the image obtained by capturing the state in which the customer performs checkout at the self-checkout machine, can be used.

In Embodiment 2, a description will be given of an erroneous operation prevention system that extracts, from an image obtained by capturing the state in which a customer performs checkout at a self-checkout machine, a commodity image according to a question content, by using a vision-language fusion model.

### <Outline of erroneous operation prevention system according to Embodiment 2>

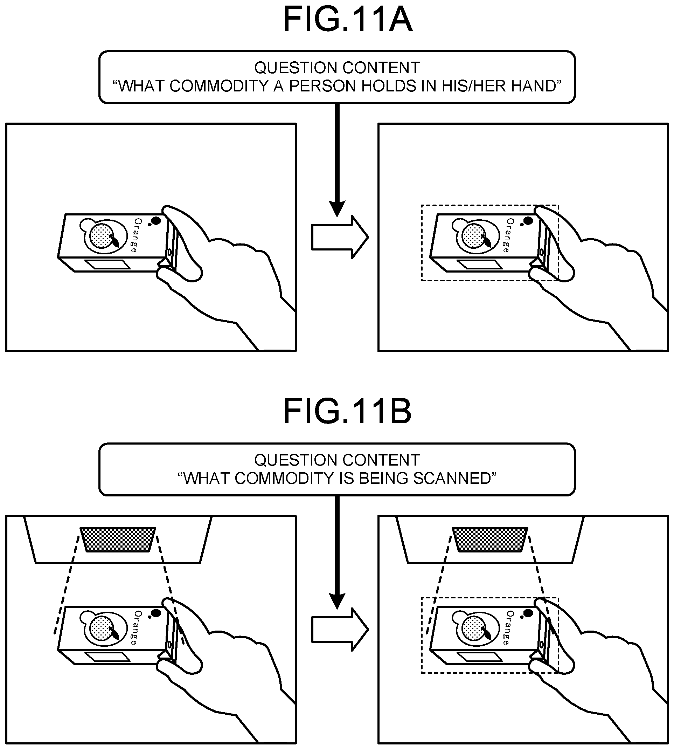

An outline of an erroneous operation prevention system according to Embodiment 2 will be described with reference to FIGS. 11A and 11B.

As shown in FIG. 11A, in the erroneous operation prevention system according to Embodiment 2, an image obtained by capturing, with the camera 10, a state in which the customer performs checkout at the self-checkout machine 20, and a question content "what commodity a person holds in his/her hand" are inputted to a vision-language fusion model, to extract the image of the commodity that the customer holds in his/her hand. Specifically, the commodity that the person holds in his/her hand (e.g., orange juice) is displayed as an area surrounded by a broken line.

Moreover, as shown in FIG. 11B, an image obtained by capturing, with the camera 10, a state in which the customer performs checkout at the self-checkout machine 20, and a question content "what commodity is being scanned" are inputted to the vision-language fusion model, to extract the image of the commodity being scanned. Specifically, the commodity being scanned (e.g., orange juice) is displayed as an area surrounded by a broken line.

### <Configuration of management device 100 according to Embodiment 2>

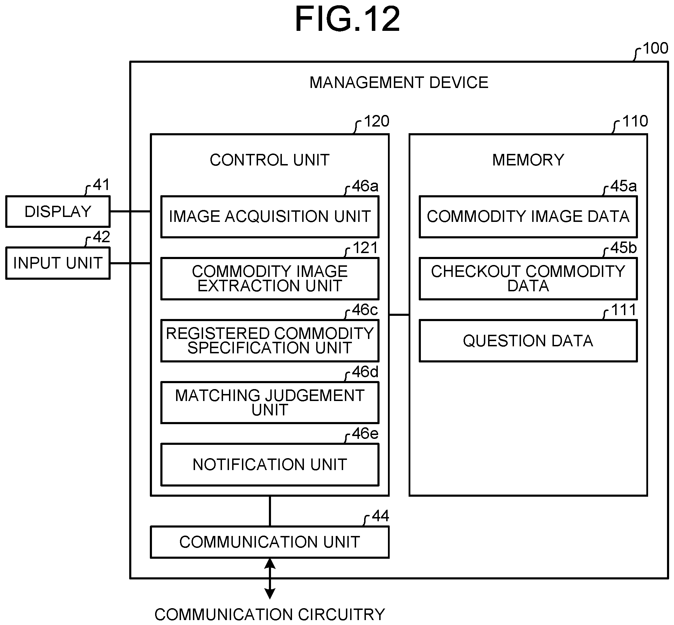

The configuration of a management device 100 according to Embodiment 2 will be described with reference to a functional block diagram shown in FIG. 12. As shown in FIG. 12, the management device 100 is connected to a display 41 and an input unit 42. The management device 100 includes a communication unit 44, a memory 110, and a control unit 120. The same functional units as those of the management device 40 shown in FIG. 4 are not repeatedly described.

The memory 110 is a storage device such as a hard disk drive or a non-volatile memory. The memory 110 stores therein commodity image data 45a, checkout commodity data 45b, and question data 111. The question data 111 is data indicating question contents to be inputted to the vision-language fusion model.

The control unit 120 is a controller for controlling the entirety of the management device 100. The control unit 120 includes an image acquisition unit 46a, a commodity image extraction unit 121, a registered commodity specification unit 46c, a matching judgement unit 46d, and a notification unit 46e. In actuality, processes corresponding to the image acquisition unit 46a, the commodity image extraction unit 121, the registered commodity specification unit 46c, the matching judgement unit 46d, and the notification unit 46e are performed by loading programs for these units into a CPU and causing the CPU to execute the programs.

The commodity image extraction unit 121 is a processing unit for extracting a commodity image from image data acquired by the image acquisition unit 46a. Based on the question contents in the question data 111, the commodity image extraction unit 121 extracts the commodity image from the image data acquired by the image acquisition unit 46a. The commodity image is extracted by the vision-language fusion model, using the question contents in the question data 111 and the image data. In Embodiment 2, Grounding DINO (Self-Distillation with No Labels) is used as the vision-language fusion model. Grounding DINO will be described in detail later.

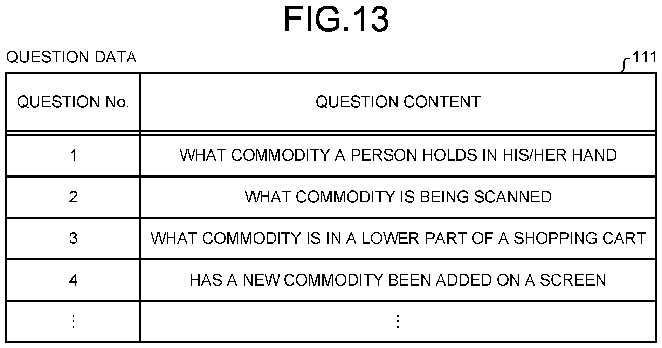

Next, an example of data stored in the memory 110 in the management device 100 shown in FIG. 12 will be described. FIG. 13 shows an example of question data 111 shown in FIG. 12.

In the question data 111 shown in FIG. 13, question number "1" is associated with a question content "what commodity a person holds in his/her hand", question number "2" is associated with a question content "what commodity is being scanned", question number "3" is associated with a question content "what commodity is in a lower part of a shopping cart", and question number "4" is associated with a question content "has a new commodity been added on a screen".

### <Outline of Grounding DINO>

An outline of Grounding DINO used as a vision-language fusion model in Embodiment 2 will be described.

Grounding DINO is a zero-shot learning model for open set object detection. Open set object detection is a computer vision technology of recognizing objects in an image or a video and specifying the positions of the objects, and is particularly characterized in being able to cope with objects in unknown categories. The zero-shot learning model is a form of machine learning, and has an ability of recognizing a new class that is not seen in a training stage. The zero-shot learning model is particularly effective when labeled data are insufficient, and when new categories are continuously added.

Grounding DINO has an ability of adapting to new objects and scenarios by fusing the concepts of DINO and GLIP (grounded language-image pre-training), and combining the modalities of texts and images.

GLIP can be regarded as an advanced version of CLIP. While CLIP uses pairs of texts and images and places great importance on the ability of comprehending texts describing the contents included in the images, GLIP focuses on more specific objects in images and their relationships, and adopts an approach of integrating more specific visual comprehension and linguistic comprehension.

Grounding DINO is capable of outputting a plurality of object boxes and noun phrases from image-text pairs. For example, Grounding DINO is capable of specifying a hand and a commodity from an image, and extracting texts corresponding to the hand and the commodity from input texts. Thus, object detection can be matched to a referring expression comprehension (REC) task. In other words, an object indicated by a given linguistic expression (e.g., a question "what commodity a person holds in his/her hand") can be specified in an image or video to recognize the position of the object.

### <Procedure regarding erroneous operation detection process according to Embodiment 2>

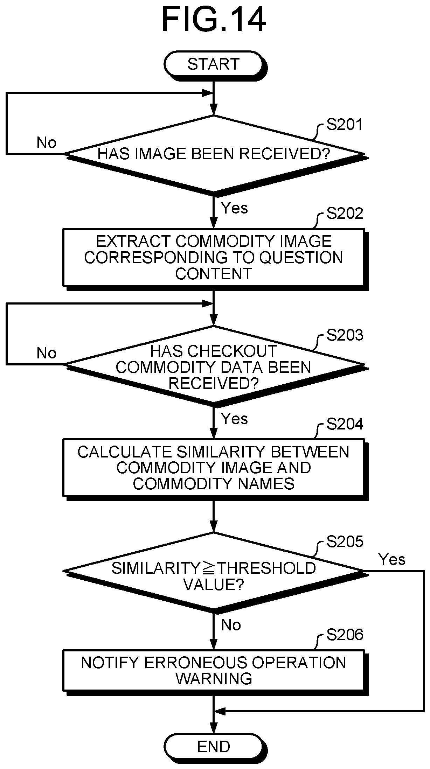

The procedure regarding the erroneous operation detection process according to Embodiment 2 will be described with reference to a flowchart shown in FIG. 14.

The camera 10 captures an image of the checkout state at the self-checkout machine 20, and transmits the captured image to the management device 100. As shown in FIG. 14, upon receiving the image from the camera 10 (step S201: Yes), the management device 100 extracts a commodity image corresponding to a question content in the question data 111 by using the vision-language fusion model (step S202), and stores the commodity image in the commodity image data 45a. If an image has not been received from the camera 10 (step S201: No), the process returns to step S201.

Upon receiving checkout commodity data from the self-checkout machine 20 (step S203: Yes), the management device 100 specifies the checkout machine ID and the commodity names from the checkout commodity data. Then, the most recent commodity image data corresponding to the checkout machine ID is extracted from the commodity image data 45a. Using the extracted commodity image data and the commodity names specified from the checkout commodity data, a similarity therebetween is calculated with the learned multimodal foundation model (step S204). If checkout commodity data has not been received from the self-checkout machine 20 (step S203: No), the process returns to step S203.

If the calculated similarity is equal to or higher than the threshold value (step S205: Yes), it is judged that the extracted commodity image data indicates the same commodities as the commodity names specified from the checkout commodity data and there is no erroneous operation, to end the process. If the calculated similarity is less than the threshold value (step S205: No), the clerk terminal 50 is notified of an erroneous operation warning, and the clerk terminal 50 announces the erroneous operation warning (step S206) to end the process.

As described above, in the erroneous operation prevention system according to Embodiment 2, the commodity image according to the question text can be extracted from the image obtained by capturing the checkout state of the customer at the self-checkout machine.

An erroneous operation prevention system according to one aspect of the present disclosure is used in a self-checkout system in which a customer registers a commodity to be purchased by his/her own operation, and performs checkout for the registered commodity. The erroneous operation prevention system includes: an image acquisition unit configured to acquire an image in which the customer is registering a commodity to be purchased; a commodity image extraction unit configured to extract a commodity image from the image acquired by the image acquisition unit; a registered commodity specification unit configured to specify commodity information registered in the self-checkout system; a matching judgement unit configured to input the commodity image and the commodity information into a large language model, and judge matching between the commodity image and the commodity information, based on a result outputted from the large language model; and a notification unit configured to, when the matching judgement unit has judged that a degree of matching is low, notify that the degree of matching is low.

In the above configuration, the matching judgement unit calculates a similarity between the commodity image and a text such as a commodity name that is the commodity information. When the similarity is equal to or lower than a predetermined threshold value, the matching judgement unit judges that there is a mismatch.

In the above configuration, the registered commodity specification unit acquires the registered commodity information from the self-checkout system via an interface.

In the above configuration, the registered commodity specification unit acquires the commodity information displayed on a screen of the self-checkout system, through character recognition of a captured image of the screen.

In the above configuration, when a commodity recognized in the commodity image has not been registered as the commodity information, the matching judgement unit judges that there is a mismatch, and the notification unit notifies that an omission of registration has occurred.

In the above configuration, when the number of commodities recognized in the commodity image is less than the number of commodities registered as the commodity information, the matching judgement unit judges that there is a mismatch, and the notification unit notifies that duplicated registration has occurred.

In the above configuration, when a commodity recognized in the commodity image is different from a commodity whose name or a commodity category is in the commodity information, the matching judgement unit judges that there is a mismatch, and the notification unit notifies that a commodity different from an actual commodity has been registered.

The present invention provides an erroneous operation prevention system in a self-checkout system in which a customer registers a commodity to be purchased by his/her own operation, and performs checkout for the registered commodity. The erroneous operation prevention system includes: an image acquisition unit configured to acquire an image in which the customer is registering a commodity to be purchased; a commodity image extraction unit configured to extract a commodity image from the image acquired by the image acquisition unit; a registered commodity specification unit configured to specify commodity information registered in the self-checkout system; a matching judgement unit configured to input the commodity image and a question text on an erroneous operation into a vision-language fusion model, and judge matching between the commodity image and the commodity information, based on a result outputted from the fusion model; and a notification unit configured to, when the matching judgement unit has judged that a degree of matching is low, notify that the degree of matching is low.

In the above configuration, the question text is a text asking what commodity a person holds in his/her hand, or what commodity is being scanned, and the matching judgement unit judges matching between the result outputted from the fusion model and the commodity information.

In the above configuration, the question text is a text asking what commodity is in a lower part of a shopping cart, and the matching judgement unit judges matching between the result outputted from the fusion model and the commodity information.

In the above configuration, the question text is a text asking whether a new commodity has been added to a screen, and the matching judgement unit judges matching between the result outputted from the fusion model and the commodity information.

An erroneous operation prevention method according to one aspect of the present disclosure is used for a self-checkout system in which a customer registers a commodity to be purchased by his/her own operation, and performs checkout for the registered commodity. The method includes: acquiring an image in which the customer is registering a commodity to be purchased; extracting a commodity image from the image acquired in the acquiring; specifying commodity information registered in the self-checkout system; inputting the commodity image and the commodity information into a large language model, and judging matching between the commodity image and the commodity information, based on a result outputted from the large language model; and notifying, when the matching judgement step has judged that a degree of matching is low, that the degree of matching is low.

An erroneous operation prevention method according to one aspect of the present disclosure is used for a self-checkout system in which a customer registers a commodity to be purchased by his/her own operation, and performs checkout for the registered commodity. The method includes: acquiring an image in which the customer is registering a commodity to be purchased; extracting a commodity image from the image acquired in the acquiring; specifying commodity information registered in the self-checkout system; inputting the commodity image and a question text on an erroneous operation into a vision-language fusion model, and judging matching between the commodity image and the commodity information, based on a result outputted from the fusion model; and notifying, when the matching judgement step has judged that a degree of matching is low, that the degree of matching is low.

A computer program product for erroneous operation prevention according to one aspect of the present disclosure is used in an erroneous operation prevention device in a self-checkout system in which a customer registers a commodity to be purchased by his/her own operation, and performs checkout for the registered commodity. The computer program product causes a computer to execute: acquiring an image in which the customer is registering a commodity to be purchased; extracting a commodity image from the image acquired in the acquiring; specifying commodity information registered in the self-checkout system; inputting the commodity image and the commodity information into a large language model, and judging matching between the commodity image and the commodity information, based on a result outputted from the large language model; and notifying, when the matching judgement procedure has judged that a degree of matching is low, that the degree of matching is low.

A computer program product for erroneous operation prevention used in an erroneous operation prevention device in a self-checkout system in which a customer registers a commodity to be purchased by his/her own operation, and performs checkout for the registered commodity. The computer program product causes a computer to execute: acquiring an image in which the customer is registering a commodity to be purchased; extracting a commodity image from the image acquired in the acquiring; specifying commodity information registered in the self-checkout system; inputting the commodity image and a question text on an erroneous operation into a vision-language fusion model, and judging matching between the commodity image and the commodity information, based on a result outputted from the fusion model; and notifying, when the matching judgement procedure has judged that a degree of matching is low, that the degree of matching is low.

According to the present disclosure, an erroneous operation during checkout for commodities with a self-checkout machine can be efficiently detected.

The components shown in the above embodiments are conceptually functional components, and thus may not necessarily be physically limited thereto. That is, distributed or integrated forms of each device are not limited to the forms illustrated in the drawings, and all or some of the forms may be distributed or integrated functionally or physically in any unit depending on various loads, use statuses, or the like.

The erroneous operation prevention system, the erroneous operation prevention method, and the erroneous operation prevention program according to the present disclosure are suitable for efficiently detecting an erroneous operation during checkout for commodities with a self-checkout machine.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

## Claims

1. An erroneous operation prevention system in a self-checkout system in which a customer registers a commodity to be purchased by his/her own operation, and performs checkout for the registered commodity, the erroneous operation prevention system comprising:
an image acquisition unit (46a) configured to acquire an image in which the customer is registering a commodity to be purchased;
a commodity image extraction unit (46b, 121) configured to extract a commodity image from the image acquired by the image acquisition unit (46a);
a registered commodity specification unit (46c) configured to specify commodity information registered in the self-checkout system;
a matching judgement unit (46d) configured to input the commodity image and the commodity information into a large language model, and judge matching between the commodity image and the commodity information, based on a result outputted from the large language model; and
a notification unit (46e) configured to, when the matching judgement unit (46d) has judged that a degree of matching is low, notify that the degree of matching is low.

2. The erroneous operation prevention system according to claim 1, wherein
the matching judgement unit (46d) calculates a similarity between the commodity image and a text that is the commodity information, and
when the similarity is equal to or lower than a predetermined threshold value, the matching judgement unit (46d) judges that there is a mismatch.

3. The erroneous operation prevention system according to claim 1 or 2, wherein
the registered commodity specification unit (46c) acquires the registered commodity information from the self-checkout system via an interface.

4. The erroneous operation prevention system according to claim 1 or 2, wherein
the registered commodity specification unit (46c) acquires the commodity information displayed on a screen of the self-checkout system, through character recognition of a captured image of the screen.

5. The erroneous operation prevention system according to claim 1 or 2, wherein
when a commodity recognized in the commodity image has not been registered as the commodity information, the matching judgement unit (46d) judges that there is a mismatch, and
the notification unit (46e) notifies that an omission of registration has occurred.

6. The erroneous operation prevention system according to claim 1 or 2, wherein
when the number of commodities recognized in the commodity image is less than the number of commodities registered as the commodity information, the matching judgement unit (46d) judges that there is a mismatch, and
the notification unit (46e) notifies that duplicated registration has occurred.

7. The erroneous operation prevention system according to claim 1 or 2, wherein
when a commodity recognized in the commodity image is different from a commodity whose name or a commodity category is in the commodity information, the matching judgement unit (46d) judges that there is a mismatch, and
the notification unit (46e) notifies that a commodity different from an actual commodity has been registered.

8. An erroneous operation prevention system in a self-checkout system in which a customer registers a commodity to be purchased by his/her own operation, and performs checkout for the registered commodity, the erroneous operation prevention system comprising:
an image acquisition unit (46a) configured to acquire an image in which the customer is registering a commodity to be purchased;
a commodity image extraction unit (46b, 121) configured to extract a commodity image from the image acquired by the image acquisition unit (46a);
a registered commodity specification unit (46c) configured to specify commodity information registered in the self-checkout system;
a matching judgement unit (46d) configured to input the commodity image and a question text on an erroneous operation into a vision-language fusion model, and judge matching between the commodity image and the commodity information, based on a result outputted from the fusion model; and
a notification unit (46e) configured to, when the matching judgement unit (46d) has judged that a degree of matching is low, notify that the degree of matching is low.

9. The erroneous operation prevention system according to claim 8, wherein
the question text is a text asking what commodity a person holds in his/her hand, or what commodity is being scanned, and
the matching judgement unit (46d) judges matching between the result outputted from the fusion model and the commodity information.

10. The erroneous operation prevention system according to claim 8, wherein
the question text is a text asking what commodity is in a lower part of a shopping cart, and
the matching judgement unit (46d) judges matching between the result outputted from the fusion model and the commodity information.

11. The erroneous operation prevention system according to claim 8, wherein
the question text is a text asking whether a new commodity has been added to a screen, and
the matching judgement unit (46d) judges matching between the result outputted from the fusion model and the commodity information.

12. An erroneous operation prevention method in a self-checkout system in which a customer registers a commodity to be purchased by his/her own operation, and performs checkout for the registered commodity, the method comprising:
acquiring an image in which the customer is registering a commodity to be purchased;
extracting a commodity image from the image acquired in the acquiring;
specifying commodity information registered in the self-checkout system;
inputting the commodity image and the commodity information into a large language model, and judging matching between the commodity image and the commodity information, based on a result outputted from the large language model; and
notifying, when the matching judgement step has judged that a degree of matching is low, that the degree of matching is low.

13. An erroneous operation prevention method in a self-checkout system in which a customer registers a commodity to be purchased by his/her own operation, and performs checkout for the registered commodity, the method comprising:
acquiring an image in which the customer is registering a commodity to be purchased;
extracting a commodity image from the image acquired in the acquiring;
specifying commodity information registered in the self-checkout system;
inputting the commodity image and a question text on an erroneous operation into a vision-language fusion model, and judging matching between the commodity image and the commodity information, based on a result outputted from the fusion model; and
notifying, when the matching judgement step has judged that a degree of matching is low, that the degree of matching is low.

14. A computer program product for erroneous operation prevention used in an erroneous operation prevention device in a self-checkout system in which a customer registers a commodity to be purchased by his/her own operation, and performs checkout for the registered commodity, the computer program product causing a computer to execute:
acquiring an image in which the customer is registering a commodity to be purchased;
extracting a commodity image from the image acquired in the acquiring;
specifying commodity information registered in the self-checkout system;
inputting the commodity image and the commodity information into a large language model, and judging matching between the commodity image and the commodity information, based on a result outputted from the large language model; and
notifying, when the matching judgement procedure has judged that a degree of matching is low, that the degree of matching is low.

15. A computer program product for erroneous operation prevention used in an erroneous operation prevention device in a self-checkout system in which a customer registers a commodity to be purchased by his/her own operation, and performs checkout for the registered commodity, the computer program product causing a computer to execute:
acquiring an image in which the customer is registering a commodity to be purchased;
extracting a commodity image from the image acquired in the acquiring;
specifying commodity information registered in the self-checkout system;
inputting the commodity image and a question text on an erroneous operation into a vision-language fusion model, and judging matching between the commodity image and the commodity information, based on a result outputted from the fusion model; and
notifying, when the matching judgement procedure has judged that a degree of matching is low, that the degree of matching is low.
